(19) **Europäisches Patentamt / European Patent Office / Office européen des brevets**

(11) **EP 1 420 364 B1**

(12) **EUROPEAN PATENT SPECIFICATION**

(45) Date of publication and mention
of the grant of the patent:
**24.11.2010 Bulletin 2010/47**

(51) Int Cl.:
***G06T 7/40*** (2006.01)

(21) Application number: **03022071.9**

(22) Date of filing: **03.02.2000**

(54) **Colour image processing method and apparatus thereof**

Bildverarbeitungsverfahren und -vorrichtung

Procédé et apparatus de procession d'image

(84) Designated Contracting States:
**AT BE CH CY DE DK ES FI FR GB GR IE IT LI LU MC NL PT SE**

(30) Priority: **05.02.1999 US 118742 P**

(43) Date of publication of application:
**19.05.2004 Bulletin 2004/21**

(62) Document number(s) of the earlier application(s) in accordance with Art. 76 EPC:
**00904102.1 / 1 153 366**

(73) Proprietors:
• **SAMSUNG ELECTRONICS CO., LTD.**
**Suweon-city, Kyungki-do (KR)**
• **The Regents of The University of California**
**Oakland,**
**CA 94607-5200 (US)**

(72) Inventors:
• **Shin, Hyun Doo**
**Bundag-gu**
**Sungnam-city**
**Kyungki-do 463 (KR)**
• **Choi, Yang Lim**
**Paldal-gu**
**Kyungki-do 442-190 (KR)**
• **Deng, Yining**
**Santa Barbara**
**CA 93106-9560 (US)**
• **Manjunath, B.S.**
**Santa Barbara**
**CA 93106-9560 (US)**

(74) Representative: **Walaski, Jan Filip et al**
**Venner Shipley LLP**
**20 Little Britain**
**London**
**EC1A 7DH (GB)**

(56) References cited:
**US-A- 5 047 842      US-A- 5 684 897**

• **DENG Y ET AL: "AN EFFICIENT LOW-DIMENSIONAL COLOR INDEXING SCHEME FOR REGION-BASED IMAGE RETRIEVAL" 1999 IEEE INTERNATIONAL CONFERENCE ON ACOUSTICS, SPEECH, AND SIGNAL PROCESSING. PHOENIX, AZ, MARCH 15 - 19, 1999, IEEE INTERNATIONAL CONFERENCE ON ACOUSTICS, SPEECH, AND SIGNAL PROCESSING (ICASSP), NEW YORK, NY: IEEE, US, vol. 6, 15 March 1999 (1999-03-15), pages 3017-3020, XP001062245 ISBN: 0-7803-5042-1**
• **SCHARCANSKI J ET AL: "COLOUR QUANTISATION FOR COLOUR TEXTURE ANALYSIS" IEE PROCEEDINGS E. COMPUTERS & DIGITAL TECHNIQUES, INSTITUTION OF ELECTRICAL ENGINEERS. STEVENAGE, GB, vol. 140, no. 2, 1 March 1993 (1993-03-01), pages 109-114, XP000359610 ISSN: 1350-2387**
• **KYOUNG-BAE EUM ET AL: "Color image segmentation using a possibilistic approach" SYSTEMS, MAN AND CYBERNETICS, 1996., IEEE INTERNATIONAL CONFERENCE ON BEIJING, CHINA 14-17 OCT. 1996, NEW YORK, NY, USA, IEEE, US, 14 October 1996 (1996-10-14), pages 1150-1155, XP010206967 ISBN: 0-7803-3280-6**

• PHANENDRA BABU G ET AL: "COLOR INDEXING FOR EFFICIENT IMAGE RETRIEVAL" MULTIMEDIA TOOLS AND APPLICATIONS, KLUWER ACADEMIC PUBLISHERS, BOSTON, US, vol. 1, no. 4, 1 November 1995 (1995-11-01), pages 327-348, XP000563569 ISSN: 1380-7501

**Description**

The present invention relates to a color image processing method and apparatus, and more particularly, to a color image processing method for retrieving a color feature descriptor used in indexing and searching a color image.

Among visual features for describing multi-media contents, color is the most dominant feature. According to conventional color image processing methods, a color histogram is used for expressing the color information of an image. However, the conventional color image processing methods using a color histogram consisting of 1024 bins have drawbacks in that the computational complexity of image processing steps for describing an image is high and much processing time is required.

A colour quantization technique that identifies dominant colours is disclosed in Scharcanski, J. *et al.,* "Colour quantisation for colour texture analysis", 8049e IEE Proceedings-E, 140(1993)March, No. 2, Stevenage, Herts., GB.

US 5,684,897 describes a method of quantizing color image data by minimising least squares error of binary coding.

It is an aim of the present invention to provide a color image processing method which can reduce the computational complexity and processing time.

It is another aim of the present invention to provide a computer readable medium having a program executable by a computer to perform the color image processing method.

It is still another aim of the present invention to provide a color image processing apparatus for performing the color image processing method.

According to an aspect of the present invention, there is provided an image processing method according to claim 1.

According to another aspect of the present invention, there is provided an image processing apparatus according to claim 8.

A feature of the present invention is embodied by a color image processing method includes the steps of (a) obtaining color vectors of an input image, (b) classifying the color vectors to obtain dominant colors of the input image and the ratios thereof, and (c) representing the dominant colors and the ratios thereof as a color feature descriptor of the input image. The method further includes

the steps of analyzing the probability of pixels in the filtered image being noisy pixels and applying appropriate weights thereto.

The color vectors are preferably quantized color vectors and the ratios are preferably percentiles.

The color image processing method may further include the step of (e) combining the quantized color vectors and the color feature descriptor and representing the combination result as the whole image.

Also, before the step (b), there may be further included the step of performing a predetermined filtering process for smoothing of the input image. Alternatively, before the step (b), the method may further include the step of performing a predetermined filtering process for noise removal of the input image.

The method may further include the step of applying a general Lloyd algorithm to the color vectors corresponding to the weighted pixels to perform color quantization.

According to another aspect of the present invention, there is provided a color image processing method for retrieving a color feature descriptor for describing color features of an image, the method including the steps of (a) segmenting an input image into a plurality of regions, (b) obtaining color vectors for the segmented regions, (c) classifying the color vectors to obtain dominant colors of the input image and the ratios thereof, and (d) representing the dominant colors and the ratios thereof as a color feature descriptor of the input image.

The present invention also provides a computer readable medium having program codes executable by a computer to perform a color image processing method for retrieving a color feature descriptor for describing color features of an image, the method comprising the steps of (a) segmenting an input image into a plurality of regions, (b) obtaining color vectors for the segmented regions, (c) classifying the color vectors to obtain dominant colors of the input image and the ratios thereof, and (d) representing the dominant colors and the ratios thereof as a color feature descriptor of the input image.

According to another aspect of the present invention, there is provided a color image processing apparatus for retrieving a color feature descriptor for describing color features of an image, including a color vector retrieving unit for receiving pixel value data of an input image and retrieving color vectors for a predetermined color coordinate system, and a color feature descriptor generating unit for obtaining the percentiles of dominant colors represented by the color vectors when the color vectors are all received and generating and outputting color feature descriptor data containing the information on the dominant colors and the percentiles thereof.

Also, the present invention provides a color image processing apparatus for retrieving a color feature descriptor for describing color features of an image, including a segmenting unit for segmenting an input image into k regions, wherein k is an arbitrary positive integer, and sequentially outputting pixel value data corresponding to the kth region, a color vector retrieving unit for receiving pixel value data of an input image and retrieving color vectors for a predetermined color coordinate system, and a color feature descriptor generating unit for obtaining the percentiles of dominant colors represented by the color vectors when the color vectors are all received and generating and outputting color feature descriptor data containing the information on the dominant colors and the percentiles thereof.

Brief Description of the Drawings

The above objects and advantages of the present invention will become more apparent by describing in detail preferred embodiments thereof with reference to the attached drawings in which:

FIG. 1 is a flow diagram showing a color image processing method according to the present invention;

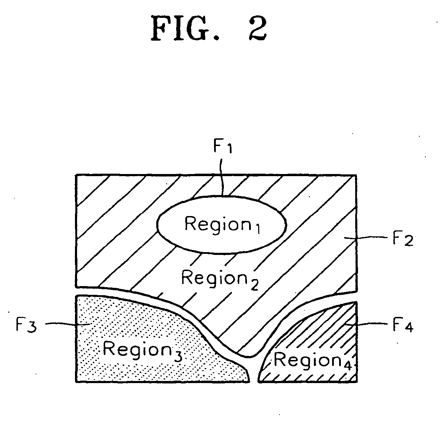

FIG. 2 is a diagram illustrating image segmentation performed in the step 106 of FIG. 1;
FIG. 3 is a block diagram of a color image processing apparatus according to the present invention; and

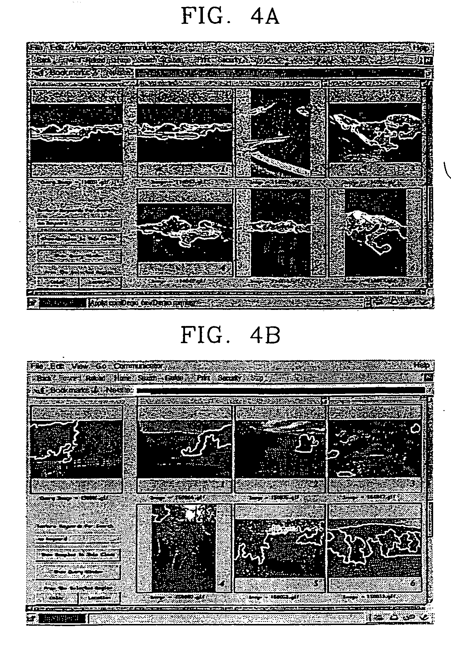

FIGS. 4A and 4B show the result obtained by performing a region-based search with respect to images indexed by a computer program based on the color image processing method according to the present invention.

Best mode for carrying out the Invention

Hereinafter, embodiments of the present invention will be described in detail with reference to the accompanying drawings.

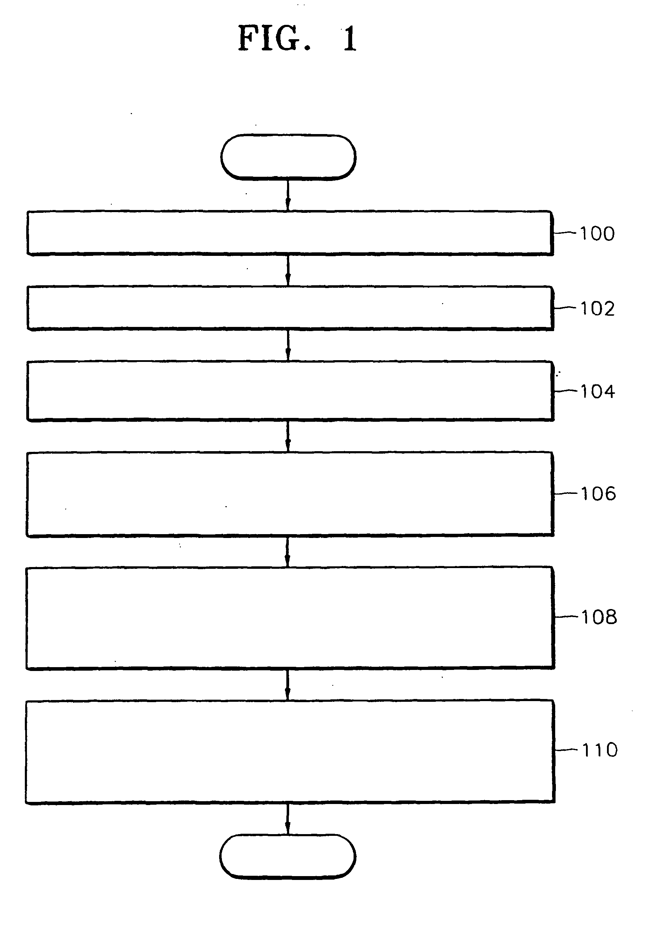

Referring to FIG. 1 illustrating a color image processing method according to the present invention, a color image A is input (step 100). The color image is segmented into a plurality of regions $F_1$, $F_2$, $F_3$ and $F_4$ (step 102). The segmentation can be performed based on edge flow, for example. Then, quantized color vectors for the respective regions $F_1$, $F_2$, $F_3$ and $F_4$ are obtained (step 104).

The step of obtaining the quantized color vectors preferably includes the following steps. First, a predetermined filtering step for smoothing and noise removal of an image is performed as a pre-processing step. Next, the probability of pixels in the filtered image being noisy pixels is analyzed to then apply an appropriate weight to the same. The probability of pixels in the filtered image being noisy pixels is obtained by the color distance from neighboring pixels. For example, i pixels, in which i is an arbitrary integer, ranging from a pixel having the minimum color distance are selected among the pixels sorted according to the color distance from a central pixel, and among the selected pixels, the pixel value which has the largest color distance is set to the maximum color distance, which is denoted by T(n). Then, the color vectors of the respective pixels are weighted by exp(-T(n)). exp(-T(n)) is defined by $v(n)$. Next, assuming that the average of T(n) values of all pixels is Tavg, the number $N$ of initial clusters to be used in quantization equals Tavg $\times$ an arbitrary constant, e.g., 2. Then, a general Lloyd algorithm is applied to the color vectors corresponding to weighted pixels to quantize the color vectors. First, using the cluster centroid ($c_i$) represented by Expression (1):

$$c_i = \frac{\sum v(n)X(n)}{\sum v(n)} \quad \ldots\ldots(1)$$

wherein $X(n)$ is the pixel value of the $n$th pixel among the sorted pixels, and a value of $D_i$ represented by Expression (2) is calculated:

$$D_i = \sum v(n)\|X(n) - c_i\|^2 \quad \ldots\ldots(2)$$

to then split a cluster having the largest value of $D_i$. This procedure is repeated until $N$ clusters are generated. After $N$ clusters are generated, a general Lloyd algorithm is performed. When the general Lloyd algorithm is performed, the cluster centroid is calculated by the Expression (1) to perform updating.

Next, clusters having similar color vectors are agglomerated by performing agglomerative clustering. Agglomerative clustering is disclosed by R.O. Duda and P.E. Hart in "Pattern Classification and Scene Analysis, John Wiley and Sons, New York, 1973," which will not be described in detail in this specification.

Then, the color vectors are classified and dominant colors represented by color vectors $[cL_i, cU_i, cV_i]$ and their percentiles $P_i$ are obtained (step 106). Here, $i$ denotes the arbitrary serial number of primary regions, ranging from 1 through $N$, L, U and V denote coordinates of the CIE LUV color coordinate system. The percentiles $P_i$ are expressed

by decimals. The sum of the percentiles $P_i$ for $i$ regions is 1 as represented by Expression (3):

$$\sum_{i=1}^{N} P_i = 1 \ \ldots\ldots(3).$$

Next, the dominant colors represented by color vectors $[cL_i, cU_i, cV_i]$ and their percentiles $P_i$ are expressed as the color feature descriptor of a pertinent region. obtained (step 108). In other words, the color feature descriptor $F$ can be represented by Expression (4):

$$F = \{\{[cL_i, cU_i, cV_i], P_i\}, i = 1, \ldots, N\} \ \ldots\ldots(4)$$

wherein $N$ is a predetermined positive integer. The color feature descriptor can be referred to as a variable-bin color histogram.

By combining pixel value data in the $k$th region, i.e., $Region_k$ and color feature descriptor data of this region, i.e., $F_k$, the whole image $A'$ is represented by Expression (5):

$$A' = \{Region_1, F_1; Region_2, F_2; \ldots; Region_k, F_k\} \ \ldots\ldots(5)$$

wherein $k$ is a predetermined positive integer representing the number of segmented regions of the image A (step 110).

The color feature descriptor retrieved by the color image processing method according to the present invention is compactly represented by a small number of numbers with respect to one region. The compact representation of the color feature descriptor can remarkably reduce the computational complexity. This allows fast search and retrieval of multi-media based contents. The color image processing method according to the present invention can be applied to an object-based image processing method such as MPEG-7.

The color image processing method is programmable by a computer program. Codes and code segments constituting the computer program can be easily derived by a computer programmer in the art. Also, the program is stored in computer readable media and is readable and executable by the computer, thereby embodying the color image processing method. The media include magnetic recording media, optical recording media, carrier wave media, and the like.

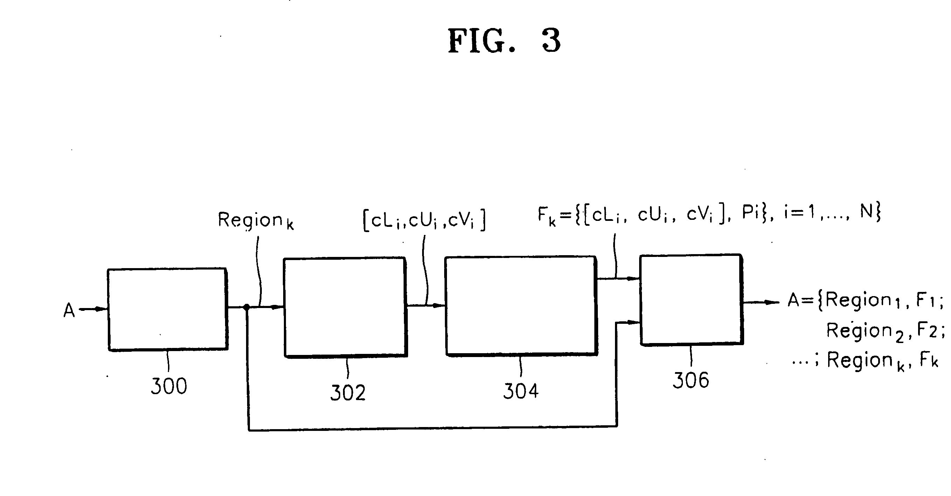

Also, the color image processing method can be implemented on a color image processing apparatus. FIG. 3 is a block diagram of a color image processing apparatus according to the present invention. Referring to FIG. 3, the color image processing apparatus includes a segmenting unit 300, a color vector retrieving unit 302, a color feature descriptor generating unit 304 and a combining unit 306.

In the operation of the color image processing apparatus, the segmenting unit 300 segments an input image A into $k$ regions and sequentially outputs pixel value data $Region_k$ in the $k$th region. The color vector retrieving unit 302 receives the pixel value data $Region_k$ in the $k$th region and retrieves the color vectors $[cL_i, cU_i, cV_i]$. When $i$ color vectors $[cL_i, cU_i, cV_i]$ are all received, the color feature descriptor generating unit 304 obtains the percentiles $P_i$ of dominant colors represented by the color vectors $[cL_i, cU_i, cV_i]$, and generates and outputs color feature descriptor data $F_k$. The color feature descriptor data $F_k$ includes information on the dominant colors represented by the color vectors $[cL_i, cU_i, cV_i]$ and their percentiles $P_i$.

In order to obtain the percentiles $P_i$ of the respective colors, it is more preferable that color quantization is performed within each segmented region. Thus, the color image processing apparatus preferably further includes a quantizing unit (not shown). The color image processing apparatus preferably further includes a filtering unit (not shown) for performing a predetermined filtering process for smoothing and noise removal of the input image. The quantizing unit analyzes the probability of pixels in the filtered image being noisy pixels, applies an appropriate weight thereto and quantizes the color vectors corresponding to the weighted pixels by a general Lloyd algorithm.

The combining unit 306 combines pixel value data in the kth region, i.e., $Region_k$ and color feature descriptor data of this region, i.e., $F_k$, to output the processed image $A'$. The color image processing apparatus according to the present invention can be applied to an object-based image processing method such as MPEG-7. Also, in the color image processing apparatus according to the present invention, expressing a color image using dominant colors of the image can also be applied to various other fields besides the field of color image processing.

As described above, the color image processing method according to the present invention is applied to an object-based image processing method, thereby allowing fast search and retrieval of multi-media contents.

<u>Industrial Applicability</u>

The present invention can be applied to the fields of object-based image processing.

**Claims**

1. An image processing method, comprising;

   (a) obtaining colour vectors of the image;
   (b) clustering the colour vectors;
   (c) determining dominant colours of the image and the ratios thereof by classifying the clustered colour vectors; and
   (d) expressing a colour feature descriptor of the image using the dominant colours and the ratios thereof, **characterized in that**:

       obtaining the colour vectors of the image comprises analyzing the probability of pixels in the image being noisy pixels and applying appropriate weights to colour vectors of the pixels.

2. A method according to claim 1 in which the obtained colour vectors are quantized colour vectors.

3. A method according to claim 1 or claim 2 in which the colour vectors are classified using colour distance.

4. A method according to any preceding claim further comprising dividing the image into regions, a colour vector being associated with each region.

5. A method according to claim 4 further comprising representing the image by a combination of pixel data in each region with the colour feature descriptor of the region.

6. A method according to any one of the preceding claims wherein clustering is performed by applying a general Lloyd algorithm to the weighted colour vectors.

7. A computer program which, when executed by a processor, is arranged to perform the method of any one of claims 1 to 6.

8. An image processing apparatus, comprising:

   means (302) for obtaining and clustering colour vectors of an image;
   means (304) for determining dominant colours of the image and the ratios thereof, by classifying colour vectors received from the obtaining and clustering means (302);
   wherein the colour feature descriptor is arranged to be expressed using the dominant colours of the image and the ratios thereof;
   **characterized in that**:

       the means (302) for obtaining and clustering colour vectors is arranged to analyse the probability of pixels in the image being noisy pixels and to apply appropriate weights to colour vectors of the pixels.

9. An apparatus according to claim 8 in which the means (302) for obtaining and clustering colour vectors is arranged to obtain quantized colour vectors.

10. An apparatus according to claim 8 or claim 9 in which the means (304) for determining dominant colours of the image is arranged to classify the colour vectors using colour distance.

11. An apparatus according to any one of claims 8 to 10 further comprising means (300) for separating the image into regions.

**12.** An apparatus according to claim 11 further comprising means (306) for forming a processed image by combining pixel information for a region with the colour feature descriptor of that region.

**13.** An apparatus according to any one of claims 8 to 12 wherein the means (302) for obtaining and clustering colour vector is arranged to perform clustering by applying a general Lloyd algorithm to the weighted colour vectors.

**Patentansprüche**

**1.** Bildverarbeitungsverfahren, umfassend:

(a) Erlangen von Farbvektoren des Bilds;
(b) Gruppieren der Farbvektoren;
(c) Ermitteln dominanter Farben des Bilds und der Verhältnisse davon durch Klassifizieren der gruppierten Farbvektoren; und
(d) Ausdrücken eines Farbmerkmal-Deskriptors des Bilds unter Verwendung der dominanten Farben und der Verhältnisse davon, **dadurch gekennzeichnet, dass:**

das Erlangen der Farbvektoren des Bilds das Analysieren der Wahrscheinlichkeit, dass Pixel im Bild rauschende Pixel sind und die Anwendung geeigneter Wichtungen auf Farbvektoren der Pixel umfasst.

**2.** Verfahren nach Anspruch 1, wobei die erlangten Farbvektoren quantisierte Farbvektoren sind.

**3.** Verfahren nach Anspruch 1 oder Anspruch 2, wobei die Farbvektoren unter Verwendung von Farbabstand klassifiziert sind.

**4.** Verfahren nach einem beliebigen vorhergehenden Anspruch, das weiter Aufteilen des Bilds in Bereiche umfasst, wobei ein Farbvektor mit jedem Bereich assoziiert ist.

**5.** Verfahren nach Anspruch 4, das weiter Darstellen des Bilds durch eine Kombination von Pixeldaten in jedem Bereich mit dem Farbmerkmal-Deskriptor des Bereichs umfasst.

**6.** Verfahren nach einem beliebigen der vorhergehenden Ansprüche, wobei Gruppieren durch Anwenden eines generellen Lloyd-Algorithmus auf die gewichteten Farbvektoren durchgeführt wird.

**7.** Computerprogramm, das, wenn von einem Prozessor ausgeführt, eingerichtet ist, das Verfahren eines beliebigen der Ansprüche 1 bis 6 durchzuführen.

**8.** Bildverarbeitungsvorrichtung, umfassend:

Mittel (302) zum Erlangen und Gruppieren von Farbvektoren eines Bilds;
Mittel (304) zum Ermitteln dominanter Farben des Bilds und der Verhältnisse davon durch Klassifizieren der Farbvektoren, die vom Erlangungs- und Gruppiermittel (302) empfangen wurden;
wobei der Farbmerkmal-Deskriptor eingerichtet ist, durch Verwendung der dominanten Farben des Bilds und der Verhältnisse davon ausgedrückt zu werden; **dadurch gekennzeichnet, dass:**

das Mittel (302) zum Erlangen und Gruppieren von Farbvektoren eingerichtet ist, die Wahrscheinlichkeit zu analysieren, dass Pixel im Bild rauschende Pixel sind und geeignete Wichtungen auf Farbvektoren der Pixel anzuwenden.

**9.** Vorrichtung nach Anspruch 8, wobei das Mittel (302) zum Erlangen und Gruppieren von Farbvektoren eingerichtet ist, quantisierte Farbvektoren zu erlangen.

**10.** Vorrichtung nach Anspruch 8 oder Anspruch 9, wobei das Mittel (304) zum Ermitteln dominanter Farben des Bilds eingerichtet ist, die Farbvektoren unter Verwendung von Farbabstand zu klassifizieren.

**11.** Vorrichtung nach einem beliebigen der Ansprüche 8 bis 10, die weiter Mittel (300) zum Trennen des Bilds in Bereiche umfasst.

**12.** Vorrichtung nach Anspruch 11, die weiter Mittel (306) zum Formen eines verarbeiteten Bilds durch Kombinieren von Pixelinformation für einen Bereich mit dem Farbmerkmal-Deskriptor für jenen Bereich umfasst.

**13.** Vorrichtung nach einem beliebigen der Ansprüche 8 bis 12, wobei das Mittel (302) zum Erlangen und Gruppieren von Farbvektoren eingerichtet ist, Gruppieren durch Anwenden eines generellen Lloyd-Algorithmus auf die gewichteten Farbvektoren durchzuführen.

**Revendications**

**1.** Procédé de traitement d'image, comprenant :

(a) l'obtention de vecteurs chromatiques de l'image ;
(b) le groupage des vecteurs chromatiques ;
(c) la détermination de couleurs dominantes de l'image et de leurs rapports en classant les vecteurs chromatiques groupés ; et
(d) l'expression d'un descripteur de caractéristique chromatique de l'image au moyen des couleurs dominantes et de leurs rapports ;
**caractérisé en ce que :**

l'obtention des vecteurs chromatiques de l'image comprend l'analyse de la probabilité que les pixels dans l'image sont des pixels bruyants et l'application de poids appropriés aux vecteurs chromatiques des pixels.

**2.** Procédé selon la revendication 1, dans lequel les vecteurs chromatiques obtenus sont des vecteurs chromatiques quantifiés.

**3.** Procédé selon la revendication 1 ou la revendication 2, dans lequel les vecteurs chromatiques sont classés par distance chromatique.

**4.** Procédé selon l'une quelconque des revendications précédentes, comprenant en outre la division de l'image en régions, un vecteur chromatique étant associé à chaque région.

**5.** Procédé selon la revendication 4, comprenant en outre la représentation de l'image par une combinaison de données de pixels dans chaque région avec le descripteur de caractéristique chromatique de la région.

**6.** Procédé selon l'une quelconque des revendications précédentes, dans lequel le groupage est effectué en appliquant un algorithme de Lloyd général aux vecteurs chromatiques pondérés.

**7.** Programme informatique qui, lorsqu'il est exécuté par un processeur, est agencé pour effectuer le procédé selon l'une quelconque des revendications 1 à 6.

**8.** Appareil de traitement d'image, comprenant :

un moyen (302) pour obtenir et grouper des vecteurs chromatiques d'une image ;
un moyen (304) pour déterminer des couleurs dominantes de l'image et leurs rapports en classant les vecteurs chromatiques reçus du moyen d'obtention et de groupage (302) ;
dans lequel le descripteur de caractéristique chromatique est agencé pour être exprimé au moyen des couleurs dominantes de l'image et de leurs rapports ;
**caractérisé en ce que :**

le moyen (302) pour obtenir et grouper des vecteurs chromatiques est agencé pour analyser la probabilité que les pixels dans l'image sont des pixels bruyants et appliquer des poids appropriés aux vecteurs chromatiques des pixels.

**9.** Appareil selon la revendication 8, dans lequel le moyen (302) pour obtenir et grouper des vecteurs chromatiques est agencé pour obtenir des vecteurs chromatiques quantifiés.

**10.** Appareil selon la revendication 8 ou la revendication 9, dans lequel le moyen (304) pour déterminer des couleurs dominantes de l'image est agencé pour classer les vecteurs chromatiques par distance chromatique.

11. Appareil selon l'une quelconque des revendications 8 à 10, comprenant en outre un moyen (300) pour séparer l'image en régions.

12. Appareil selon la revendication 11, comprenant en outre un moyen (306) pour former une image traitée en combinant des informations de pixels d'une région avec le descripteur de caractéristique chromatique de cette région.

13. Appareil selon l'une quelconque des revendications 8 à 12, dans lequel le moyen (302) pour obtenir et grouper des vecteurs chromatiques est agencé pour effectuer un groupage en appliquant un algorithme de Lloyd général aux vecteurs chromatiques pondérés.

# FIG. 1

# FIG. 2

$F_1$

Region$_1$

$F_2$

Region$_2$

$F_3$

Region$_3$

$F_4$

Region$_4$

# FIG. 3

EP 1 420 364 B1

$Region_k$      $[cL_i, cU_i, cV_i]$      $F_k = \{[cL_i, cU_i, cV_i], Pi\}, i=1,..., N\}$

A →

300

302

304

306

A = {$Region_1$, F1;

$Region_2$, F2;

...; $Region_k$, Fk

FIG. 4A

FIG. 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5684897 A